# EUROPÄISCHE PATENTANMELDUNG

(11) **EP 4 070 975 A1**
(43) Veröffentlichungstag der Anmeldung: **12.10.2022**
(21) Anmeldenummer: 22167160.5
(22) Anmeldetag: 07.04.2022
(51) Int. Cl.: B60J 5/06

(54) **PLANENROLLER ZUR VERSCHIEBBAREN LAGERUNG EINER PLANE**

(30) Priorität: 08.04.2021 DE 102021108772
(71) Anmelder: Fliegl, Helmut, 07819 Triptis (DE)
(72) Erfinder: Fliegl, Helmut, 07819 Triptis (DE)
(74) Vertreter: Kramer Barske Schmidtchen Patentanwälte PartG mbB

(57) **Zusammenfassung**

Die vorliegende Erfindung betrifft einen Planenroller (1) zur verschiebbaren Lagerung einer Plane (2) eines Nutzfahrzeugs wie zum Beispiel eines Lastkraftwagenanhängers. Der Planenroller (1) umfasst eine Laufrollenhalterung (5), die einen ersten Endbereich (8a) und einen zweiten Endbereich (8b) und einen hierzwischen befindlichen Auflagebereich (6) umfasst, der von den beiden Endbereichen (8a, 8b) abgesetzt und als Anlage für eine Befestigungsschlaufe (7) der Plane (2) ausgebildet ist. Mindestens eine in einer am Nutzfahrzeug vorhandenen Laufschiene (4) führbare Laufrolle (3) ist an dem ersten Endbereich (8a) gelagert. Ein von der Laufrollenhalterung (5) nicht umschlossener, frei zugänglicher Zwischenraum ist zwischen der Laufrolle (3) an dem ersten Endbereich (8a) und dem zweiten Endbereich (8b) ausgebildet und der zwischen den beiden Endbereichen (8a, 8b) befindliche Auflagebereich (6) ist von dem Zwischenraum zum Einbringen der Befestigungsschlaufe (7) her frei zugänglich.

## Beschreibung

### Technisches Gebiet

Die vorliegende Erfindung betrifft einen Planenroller zur verschiebbaren Lagerung einer Plane eines Nutzfahrzeugs und eine Schiebeplane mit Planenrollern für ein Nutzfahrzeug.

### Hintergrund

Im vorliegenden Fall sind unter dem Begriff Nutzfahrzeuge sowohl motorisierte Kraftfahrzeuge, die nach ihrer Bauart und Einrichtung zum Transport von Personen und Gütern oder zum Ziehen von Anhängern bestimmt sind, als auch nicht motorisierte Fahrzeuganhänger zu subsumieren.

Bei Nutzfahrzeugen ist der Laderaum oftmals mit einer verschiebbaren Plane verschließbar, um die Beladung vor äußeren Umwelteinflüssen zu schützen. Die Schiebeplane erstreckt sich z.B. seitlich des Laderaums von einem Vorderende zu einem Hinterende des Laderaums über die gesamte Laderaumlänge. Die Plane ist üblicherweise an sogenannten Planenrollern angebracht. Die Laufschienen sind beispielsweise an dem oberen Nutzfahrzeugaufbau angebracht. Die Schiebeplane kann auf Planenrollern, die in einer Laufschiene am Nutzfahrzeugaufbau geführt sind, von dem Vorderende zu dem Hinterende des Laderaums hin- und her verschoben werden.

Ein Planenroller umfasst Laufrollen, die an einer Laufrollenhalterung gelagert sind. Die Laufrollen sind so ausgebildet, dass sie in der Laufschiene abrollen können. Die Laufrollenhalterung verbindet die Plane mit den Laufrollen. Die Laufrollen und die Laufrollenhalterung sind in der Regel über ein Kugellager drehbar miteinander verbunden. Die Laufrollenhalterung ist über Gurte bzw. Bandschlaufen fest mit der Plane verbunden. Die Gurte bzw. Bandschlaufen werden dabei entweder direkt auf die Plane geschweißt oder angenäht.

Die Verbindung zwischen der Laufrollenhalterung und dem Gurt der Plane erfolgt durch Einschlaufen des Gurtes oder der Bandschlaufe durch eine in dem Planrollerhalter vorgesehenen Schlitz oder z.B. durch eine Nietverbindung zwischen dem Gurt und der Laufrollenhalterung. Die Befestigungsschlaufe muss also aufwändig durch einen in der Laufrollenhalterung vorgesehenen geschlossenen Schlitz hindurchgeführt und regelmäßig fest mit der Plane verbunden werden.

Damit sich die Schiebeplane einfach von z.B. dem Vorderende zu dem Hinterende des Laderaums verschieben lässt und eine gute Führung der Schiebeplane gewährleistet ist, sind eine Vielzahl von Planenrollern über die Länge der Schiebeplane gleichmäßig verteilt angebracht. In vielen Einsatzgebieten für Schiebeplanen kommt es aber zu einer Vielzahl an Bewegungsvorgängen durch Öffnen beziehungsweise Schließen im Rahmen der Beladung bzw. Entladung. Dadurch verschleißen die Planenroller beziehungsweise insbesondere die Laufrollen eines Planenrollers teilweise sehr schnell und müssen ausgewechselt werden. Gleiches ergibt sich resultierend aus der vorgegebenen Entlade- bzw. Beladegeschwindigkeit u.a. in den Lieferzyklen "just in time" bzw. "just in sequence" (Automotivebereich). Das ist bei den bisherigen Planenrollern sehr zeitaufwändig und damit teuer, da die Gurte bzw. Bandschlaufen von der Plane gelöst werden müssen, um dann diese aus den Planenrollern ausschlaufen zu können. Nach dem Austausch eines verschlissenen Planenrollers nach dem Stand der Technik muss dann der Gurt bzw. der Planenroller wieder an die Plane angeschweißt oder anderweitig hiermit verbunden werden.

DE 10 2016 116 390 A1 beschreibt eine Planenaufhängvorrichtung mit einer Basisplatte, an der wenigstens eine Anschlusseinrichtung für eine Plane und wenigstens zwei Tragrollen angeordnet sind, die entlang eines Längsträgers eines Verdeckgestells für einen Planenaufbau verlagerbar sind. Zumindest eine zu den Tragrollen senkrechte Führungsrolle ist an einer Schmalseite der Basisplatte gelagert.

In der DE 42 22 445 A 1 wird eine Zugvorrichtung für einen Vorhang beschrieben. Die Zugvorrichtung weist eine Schiene mit einem Montagekanal, zwei Schnurkanälen, einem Trägerkanal sowie einem seitlich offenen Führungskanal auf. Die Träger weisen jeweils eine Rolle auf, die in einem seitlichen Führungsschlitz des Führungskanals geführt sind. Die Träger und insbesondere Laufrillen der Rollen sind so dimensioniert, dass bei einem Verdrehen der Träger um ihre vertikale Achse bei einer Betätigung des Vorhanges die Rollen auch dann reibungsarm im Führungsschlitz abrollen, wenn die Stege der Träger seitlich an den Wänden des Trägerkanals anstehen. Der Führungskanal ist vergleichsweise eng ausgebildet, so dass der Abstand des Schwerpunktes der Läufer zur Frontseite der Schiene kurz gehalten werden kann. Die beiden Schnurkanäle sind jeweils nur nach unten offen. Die Zugvorrichtung kann auch bei gebogener Schiene geräusch- und reibungsarm betätigt werden.

DE 10 2015 001 092 A1 beschreibt eine Planenaufhängvorrichtung mit einer Basisplatte, an der wenigstens eine Anschlusseinrichtung für eine Plane und wenigstens zwei Tragrollen angeordnet sind, die entlang eines Längsträgers eines Verdeckgestells für einen Planenaufbau verlagerbar sind. Eine Momentenabstützung ist an die Basisplatte angeschlossen. Die Momentenabstützung weist ein Stützglied auf, das in eine Richtung quer zu der Basisplatte vorspannbar ist.

Das der Erfindung zugrunde liegende technische Problem besteht darin, die Austauschbarkeit von Planenrollern zu verbessern.

### Zusammenfassung der Offenbarung

Gemäß einem ersten Aspekt der vorliegenden Erfindung wird das der Erfindung zugrunde liegende technische Problem durch einen Planenroller zur verschiebbaren Lagerung einer Plane eines Nutzfahrzeugs wie zum Beispiel eines Lastkraftwagenanhängers gelöst. Der Planenroller umfasst eine Laufrollenhalterung, die einen ersten Endbereich und einen zweiten Endbereich und einen hierzwischen befindlichen Auflagebereich umfasst, der von den beiden Endbereichen abgesetzt und als Anlage für eine Befestigungsschlaufe der Plane ausgebildet ist. Mindestens eine in einer am Nutzfahrzeug vorhandenen Laufschiene führbare Laufrolle ist an dem ersten Endbereich gelagert. Ein frei zugänglicher Zwischenraum ist zwischen der Laufrolle an dem ersten Endbereich und dem zweiten Endbereich ausgebildet. Frei zugänglich ist hier gleichzusetzen mit der Tatsache, dass der Zwischenraum von der Laufrollenhalterung nicht durchgehend umschlossen ist, also der Auflagebereich nicht Teil eines Durchgangsloches ist, das von der Laufrollenhalterung vollständig umschlossen ist, sondern dieses Durchgangsloch einen Schlitz oder Durchgang nach außen zur Umgebung aufweist. Folglich ist der zwischen den beiden Endbereichen befindliche Auflagebereich in einer Seitenansicht des Planenrollers von außen über den freien, offenen Zwischenraum frei zugänglich und ein Einhaken oder Aushaken der Befestigungsschlaufe möglich, ohne diese zu öffnen.

Der Erfindung liegt der Gedanke zugrunde, dass der Planenroller jederzeit lösbar mit einer Plane verbindbar ist, ohne dass die an der Plane befestigte Befestigungsschlaufe geöffnet bzw. zerstört werden muss. Der Planenroller kann einfach eingehakt werden. Im Gegensatz zu bekannten Planenrollern wird dadurch ein Austausch von Planenrollern erheblich vereinfacht und verbessert. Bei Beschädigung beziehungsweise Verschleiß der Laufrollen des Planenrollers kann der defekte Planenroller in einfachster Art und Weise demontiert bzw. ausgetauscht werden, indem der Planenroller in die Befestigungsschlaufe aus der Befestigungsschlaufe ausgehakt wird. Die Demontage des Planenrollers erfordert kein aufwändiges Öffnen sowie anschließendes Verschließen der Befestigungsschlaufe der Plane. Ohne ein Auftrennen der Befestigungsschlaufe, die beispielsweise durch einen Planengurt ausgebildet ist, kann die Verbindung zwischen Planenroller und Plane gelöst werden. Es kann somit nicht zu einer Beschädigung der Plane kommen. Entsprechend lassen sich neue Planenroller einfach in die Befestigungsschlaufe einführen. Die erforderlichen Wartungsarbeiten zum Austausch beschädigter beziehungsweise verschlissener Laufrollen begrenzen sich auf ein Minimum. Im Vergleich zu bisher bekannten Planenrollern stellt sich dadurch eine hohe Zeit- sowie Kostenersparnis ein. Außerdem bleiben Zusatztätigkeiten wie eine Demontage oder ein Zerschneiden der Gurte aus. Entsprechend kann es nicht zu einer Beschädigung der Plane kommen.

Unter dem Begriff Laufrolle sind gemäß der vorliegenden Offenbarung auch Gleitstücke zu verstehen. Entsprechend können die Laufrollen also drehbar an den Endbereichen der Laufrollenhalterung, beispielsweise über Kugellager, gelagert und in der Laufschiene abrollbar sein. Alternativ können die Laufrollen, wenn sie als Gleitstück ausgebildet sind, nicht drehbar an den Endbereichen der Laufrollenhalterung gelagert und in der Laufschiene gleitbar sein.

Als Laufrollen werden beispielsweise Laufrollen des Typs Rillenkugellager 608-ZZ mit zwei Rillen in der Außenlagerschale, sodass der aufgespritzte Kunststoffring aus PA6 formschlüssig hält bzw. fixiert ist, verwendet.

Gemäß einer Alternative ist zumindest eine Laufrolle nur an einem Endbereich vorgesehen. Bei dieser Ausgestaltung kann es aber auch vorteilhaft sein, dass ein Laufrollenpaar an dem einen Endbereich vorgesehen ist und die Laufrollenhalterung sich zwischen den beiden einander gegenüberliegenden Laufrollen an dem einen Endbereich befindet.

Gemäß einer weiteren Alternative ist zumindest eine Laufrolle an beiden Endbereichen vorgesehen. Auch bei dieser Ausgestaltung kann es vorteilhaft sein, dass jeweils ein Laufrollenpaar an dem jeweiligen Endbereich vorgesehen ist und die Laufrollenhalterung sich zwischen den beiden einander gegenüberliegenden Laufrollen an dem jeweiligen Endbereich befindet.

Bevorzugt werden die Laufrollen mit dem jeweiligen Endbereich der Laufrollenhalterung fest verpresst. Beispielsweise kann mithilfe einer auf der Laufrollenhalterung vorgesehenen Nase ein Anschlag für die Laufrolle geschaffen werden, so dass diese nur bis zu dieser Nase geschoben werden kann. Somit wird festgelegt, wie weit die Laufrolle auf die Laufrollenhalterung gepresst bzw. aufgebracht wird.

Das Ende der Laufrollenhalterung kann gestaucht werden, um die Laufrolle auf der Laufrollenaufnahme zu fixieren. Die Stauchung ist bevorzugt so auszuführen, dass sie nicht über die Laufrolle in Richtung der Drehachse hervorsteht. Alternativ kann das Lager auch beispielsweise mit einer Vernietung, Aufschrumpfung, Verklebung, durch Kerben auf der Achse oder "Körnerschlag" form-, kraft- und/oder stoffschlüssig auf der Laufrollenhalterung angebracht werden.

Die Laufrollen sind so an dem ersten oder dem ersten und dem zweiten Endbereich auf der Laufrollenhalterung angebracht, dass zwischen der Laufrolle und dem in Seitenansicht gegenüberliegenden Endbereich beziehungsweise zwischen den in Seitenansicht gegenüberliegenden Laufrollen, ein Zwischenraum vorhanden ist, durch den eine Befestigungsschlaufe zu dem Auflagebereich hindurchführbar ist. Die Befestigungsschlaufe wird dabei so durch den Freiraum hindurchgeführt, dass eine Laufrolle durch die Öffnung der Befestigungsschlaufe hindurchgesteckt wird und die Befestigungsschlaufe dann derart weitergeschoben wird, dass der Auflagebereich in der Befestigungsschlaufe positioniert wird.

Bei einer beispielhaften Ausführungsform des Planenrollers ist ein durchgängig freier Raum zwischen dem Auflagebereich für die Befestigungsschlaufe und dem Zwischenraum vorhanden, so dass der Planenroller als Ganzes in die geschlossene Befestigungsschlaufe einfädelbar ist.

Insbesondere wird dadurch gewährleistet, dass sich die Befestigungsschlaufe durch den freien Raum auf den Auflagebereich auflegen lässt.

Bei einer beispielhaften Ausführungsform des Planenrollers hat die Laufrollenhalterung in einer Seitenansicht eine im Wesentlichen C- oder U- oder V-Form. Die zwei Endbereiche befinden sich an den zwei vertikalen Seitenabschnitten dieser C- oder U- oder V-Form. Der Auflagebereich ist an der den Endbereichen zugewandten Seite eines Mittelbereichs dieser C- oder U- oder V-Form ausgebildet.

Bevorzugt sind die Formen symmetrisch ausgeführt. Bevorzugt verläuft die Laufrollenhalterung im Bereich des Auflagebereichs zumindest bereichsweise parallel zu einer gedachten Verbindungslinie zwischen den Drehachsen der zwei Laufräder. Durch die parallele Ausgestaltung des Auflagebereichs wird eine gleichmäßige Belastung der Laufrollen durch die Gewichtskraft der Plane, die mit der Laufrollenhalterung verbunden ist, erreicht.

Mit einer C- oder U- oder V-Form ist es möglich, in materialsparender Bauweise den Auflagebereich mit einem Abstand zu den Laufrollen anzuordnen. Die Länge der vertikalen Seitenabschnitte und der Winkel der Seitenabschnitte zu dem Auflagebereich ist so gewählt, dass die eingehängte Plane die Bewegung der Laufrollen nicht behindert und blockiert. Ferner kann durch die vertikalen Seitenabschnitte eine seitliche Verschiebesicherung für die aufgelegte Befestigungsschlaufe bereitgestellt werden.

Bevorzugt sind die vertikalen Seitenabschnitte rechtwinklig auf dem Mittelbereich angeordnet. Aber, die C- oder U- oder V-Form schließt Winkel zwischen den vertikalen Seitenabschnitte und dem Mittelbereich kleiner 90° und größer 90° ein. Beispielsweise können die vertikalen Seitenabschnitte in einem Winkel von 70° oder 110° auf dem Mittelbereich angeordnet sein.

Bei einer beispielhaften Ausführungsform des Planenrollers ist die maximale Breite der Laufrollenhalterung größer als die maximale Breite von der einen zu der anderen, in Seitenansicht gegenüberliegenden Laufrolle. Die maximalen Breiten werden jeweils in Richtung einer gedachten Verbindungslinie zwischen den Drehachsen der beiden, in Seitenansicht gegenüberliegenden Laufrollen gemessen.

Die gedachte Verbindungslinie zwischen den beiden Drehachsen der in Seitenansicht gegenüberliegenden Laufrollen entspricht der Rollrichtung des Planenrollers in der Führungsschiene des Nutzfahrzeugs.

Ist die maximale Breite der Laufrollenhalterung größer als die maximale Breite von der einen zu der anderen Laufrolle wird sichergestellt, dass bei der Verwendung mehrerer Planenroller in der Laufschiene die Laufrollen nebeneinander liegender Planenroller nicht aneinanderstoßen. Stoßen zwei nebeneinander liegende Planenroller zusammen, so stoßen sie nicht an den Laufrollen, sondern an den Laufrollenhalterungen bzw. dem metallischen Körper zusammen. Eine Beschädigung der Laufrollen infolge eines gegenläufigen Aneinanderreibens während der Bewegung der Plane durch z.B. Verschieben kann so vermieden werden.

Bei einer beispielhaften Ausführungsform ist die Laufrollenhalterung ein durchgängiges Bauteil z.B. ein Drahtbiegeteil.

Als durchgängiger Körper ist gemäß der vorliegenden Offenbarung ein Körper zu verstehen der keine Durchbrüche wie beispielsweise einen Schlitz oder eine Durchgangsbohrung aufweist. Es ergeben sich dadurch fertigungstechnisch sehr einfache Körper, da auf das Einbringen von Durchbrüchen verzichtet wird.

Bei einer beispielhaften Ausführungsform ist die Laufrollenhalterung ein einstückiges Bauteil aus beispielsweise räumlich gekrümmtem Rundstab wie Rundstahldraht.

Es ergeben sich dadurch fertigungstechnisch sehr einfache Körper, da auf das Verbinden mehrerer Bauteile verzichtet werden kann.

Bei einer beispielhaften Ausführungsform ist die Laufrollenhalterung ein mehrteiliges Bauteil, das aus mehreren, fest miteinander verbundenen, insbesondere verschweißten Segmenten besteht

Die Laufrollenhalterung kann beispielsweise aus mehreren - z.B. steckbaren - Bauteilen bestehen. Dadurch wird die Herstellung unterschiedlicher Ausgestaltungen in Baukastenprinzip ermöglicht.

Bei einer beispielhaften Ausführungsform ist die Laufrollenhalterung ein Bauteil mit kreisförmigen Querschnitt, der kleiner dem 0,5-fachen des Laufrollenaußendurchmessers ist, vorzugsweise kleiner 30 mm ist, weiter vorzugsweise kleiner 15 mm ist.

Mit einer derartigen Ausführungsform lassen sich sehr leichte, materialarme Bauformen realisieren. Beispielsweise ist die Laufrollenhalterung durch ein schmales, zylindrisches Bauteil ausgebildet, welches in einer C- oder U- oder V-Form von dem ersten Endbereich zu dem zweiten Endbereich verläuft. Insbesondere lässt sich gebogener Rundstahldraht verwenden.

Bei einer beispielhaften Ausführungsform ist die Laufrollenhalterung aus Metall oder einer Metalllegierung gefertigt.

Die Laufrollenhalterung kann beispielsweise ein Stahldraht sein, der in einer C- oder U- oder V-Form gebogen wird. Dadurch entsteht ein fertigungstechnisch einfaches und leichtes Bauteil in Form eines Stahlbügels. Auch im ersten und zweiten Endbereich der Laufrollenhalterung kann ein solcher Stahlbügel durch Biegen in die gewünschte Form gebracht werden.

Der metallische Körper kann auch hohl ausgebildet sein. Beispielsweise werden als Metall oder Metalllegierung die Stähle S235 oder S355, eingesetzt.

Bei einer beispielhaften Ausführungsform des Planenrollers ist die Laufrollenhalterung aus Kunststoff gefertigt.

Beispielsweise kann die Laufrollenhalterung als Kunststoffspritzgussteil ausgebildet sein. Somit lassen sich kostengünstige und leichte Bauteile realisieren. Unter den Begriff Kunststoff sind auch CFK-Material oder GFK-Gewebe zu verstehen.

Bei einer beispielhaften Ausführungsform des Planenrollers hat der Zwischenraum eine minimale Weite, die im Bereich des 0,5-fachen bis 1-fachen des Laufrollenaußendurchmessers, vorzugsweise im Bereich von 1 mm bis 100 mm, weiter vorzugsweise im Bereich von 5 mm bis 30 mm, weiter vorzugsweise im Bereich von 10 mm bis 20 mm liegt.

Die minimale Weite des Zwischenraums wird entlang einer gedachten Verbindungslinie zwischen den beiden Drehachsen der Laufrollen gemessen. Diese Richtung entspricht der Rollrichtung des Planenrollers in der Führungsschiene des Nutzfahrzeugs.

Durch einen minimalen Abstand innerhalb dieses Bereiches wird zum einen ein einfaches Aufbringen der Befestigungschlaufe durch den Zwischenraum, der sich zwischen den zwei Laufrollen befindet, auf den Auflagebereich gewährleistet. Zum anderen wird die Baugröße des Planenrollers möglichst kompakt gehalten.

Gemäß einer beispielhaften Ausführungsform liegt ein minimaler Abstand zwischen der Laufrolle und dem Auflagebereich im Bereich des 0,5-fachen bis 1-fachen des Laufrollenaußendurchmessers, vorzugsweise im Bereich von 1 mm bis 100 mm, weiter vorzugsweise im Bereich von 5 mm bis 30 mm, weiter vorzugsweise im Bereich von 10 mm bis 20 mm.

Durch einen minimalen Abstand in diesem Bereich wird eine kompakte Bauweise erreicht und gleichzeitig ausreichend Raum bereitgestellt, um eine Kollision der Plane mit den Laufrollen bei Verwendung des Planenrollers zu vermeiden.

Gemäß einer beispielhaften Ausführungsform liegt eine Länge des Auflagebereichs im Bereich des 1,5-fachen bis 2,5-fachen des Laufrollendurchmessers (L_{D}), insbesondere im Bereich von 1 mm bis 100 mm liegt.

Die Länge des Auflagebereichs wird entlang einer gedachten Verbindungslinie zwischen den beiden Drehachsen der Laufrollen gemessen. Diese Richtung entspricht der Rollrichtung des Planenrollers in der Führungsschiene des Nutzfahrzeugs.

Die Länge des Auflagebereichs wird vorzugsweise so gewählt, dass sie der Schlaufenbreite der verwendeten Befestigungsschlaufe entspricht. Der Auflagebereich kann auch etwas größer oder kleiner als die Schlaufenbreite ausgeführt sein. So kann beispielsweise bei einer Befestigungsschlaufe mit einer Breite von 50 mm eine Länge des Auflagebereichs von etwa 45 mm bis 55 mm gewählt werden. Durch eine etwas kleinere Länge wie beispielsweise 45 mm kann ein leichtes Verklemmen der Befestigungsschlaufe erreicht werden. Ein derartiges Verklemmen hält den Rollenplaner besser in Position, insbesondere dann, wenn die Plane nicht verzurrt ist oder zusammengeschoben wird. Hingegen kann mit einer etwas größeren Länge wie beispielsweise 55 mm erreicht werden, dass die Plane mit etwas Spiel in horizontaler Richtung auf dem Planenroller gleiten kann.

Gemäß einer beispielhaften Ausführungsform sind jeweils mehrere Laufrollen an dem ersten Endbereich der Laufrollenhalterung hintereinander angeordnet und/oder jeweils mehrere Laufrollen an dem zweiten Endbereich der Laufrollenhalterung hintereinander angeordnet.

Dadurch wird die Belastung der Laufrollen durch die Gewichtskraft der Plane auf mehrere, beispielsweise jeweils zwei Laufrollen an dem ersten und dem zweiten Endbereich verteilt und die Lebensdauer des Planenrollers kann erhöht werden.

Gemäß einer beispielhaften Ausführungsform sind jeweils mehrere Laufrollen an dem ersten Endbereich der Laufrollenhalterung einander gegenüberliegend angeordnet und/oder jeweils mehrere Laufrollen an dem zweiten Endbereich der Laufrollenhalterung einander gegenüberliegend angeordnet.

Durch eine derartige Ausführungsform ist kompakt und verteilt die Gewichtskraft der Plane auf mehrere, beispielsweise jeweils zwei Laufrollen an dem ersten und dem zweiten Endbereich verteilt und die Lebensdauer des Planenrollers kann erhöht werden.

Bei einer beispielhaften Ausführungsform ist die maximale Breite des Planenrollers kleiner dem 3-fachen des Laufrollenaußendurchmessers, insbesondere kleiner 120 mm. Alternativ oder zusätzlich ist die maximale Höhe des Planenrollers kleiner dem 2-fachen des Laufrollenaußendurchmessers, insbesondere kleiner 100 mm.

Die maximale Breite ist in Richtung einer gedachten Verbindungslinie zwischen Drehachsen der beiden Laufrollen gemessen. Die maximale Höhe ist senkrecht zu der Richtung der gedachten Verbindungslinie zwischen Drehachsen der beiden Laufrollen gemessen.

Ein Planenroller mit diesen Abmaßen gewährleistet eine kompakte und leichte Bauweise.

Gemäß einer beispielhaften Ausführungsform sind die Laufrollen derart an der Laufrollenhalterung angebracht, dass der Auflagebereich zumindest teilweise innerhalb eines Bereiches, der sich zwischen zwei Ebenen, die senkrecht zur Drehachse der Laufrolle verlaufen und die Laufrolle an gegenüberliegenden Enden der Laufrolle berührt, erstreckt, liegt.

Zwei derartige Ebenen schließen die Laufrolle beidseitig ein. Sie definieren einen Raumbereich, der sich mit der Breite der Laufrolle, gemessen in Richtung der Drehachse, senkrecht zur Drehachse erstreckt. Der Auflagebereich liegt in diesem Raumbereich oder ragt zumindest teilweise in diesen Raumbereich hinein. Dadurch kann erreicht, dass sich der Auflagebereich, auf dem die Plane aufliegt, unterhalb der Laufrolle befindet.

Gemäß einer beispielhaften Ausführungsform sind die Laufrollen derart an der Laufrollenhalterung angebracht, dass zwischen einer Ebene, die senkrecht zur Drehachse der Laufrolle verläuft, und einer vertikalen Erstreckungsrichtung der zwei vertikalen Seitenabschnitte ein Neigungswinkel im Bereich 1° bis 40° , vorzugsweise im Bereich 10° bis 30° liegt.

Durch eine derartige Neigung der Laufrollen zu der Laufrollenhalterung kann erreicht werden, dass sich der Auflagebereich, auf dem die Befestigungsschlaufe der Plane aufliegt, unterhalb der Laufrolle befindet. Eine derartige Ausgestaltung ermöglicht es ferner, dass der Auflagebereich des Planenrollers an dem Dachholm anstoßen kann (mit der Befestigungsschlaufe dazwischen) und gleichzeitig die Laufrolle des Planenrollers in der in dem Dachholm befindlichen Laufschiene gelagert ist.

Gemäß einem weiteren Aspekt der vorliegenden Erfindung wird das der Erfindung zugrunde liegende technische Problem durch eine Schiebeplane zum Abdecken eines Laderaums eines Nutzfahrzeugs, wie beispielsweise eines Lastkraftwagenanhängers gelöst. Die Schiebeplane umfasst eine Plane, an der mehrere Befestigungsschlaufen angebracht sind, und mehrere Planenroller gemäß dem ersten Aspekt dieser Erfindung. Jeweils ein Planenroller ist derart in eine Befestigungsschlaufe der Plane eingeschlauft, dass die Befestigungsschlaufe an dem Auflagebereich des Planenrollers anliegt. Die Plane ist mithilfe der über die Befestigungsschlaufe befestigten Planenroller auf der mit dem Nutzfahrzeug verbundenen Laufschiene hin- und herverschiebbar.

Als Planen lassen sich beliebige Typen von Abdeckplanen verwenden. Beispielsweise können Planen aus reißfesten Polyester-Geweben oder PVC oder Polyethylen oder allgemein "Kunststoff' (PE, PVC, Polyamidgewebe etc.) oder Garn verwendet werden.

Die Befestigungsschlaufen sind bevorzugt mit einem Gurt verbunden, der auf der Plane angebracht ist. Bevorzugt sind die Befestigungsschlaufen so ausgebildet, dass die Schlaufenöffnung durch Zusammendrücken beziehungsweise Langziehen der Schlaufe flexibel verändert werden kann. So kann beispielsweise für das Einstecken eines Planenrollers die Schlaufe so zusammengedrückt werden, dass die Schlaufenform eher wie ein Kreis und nicht wie ein langgezogener Schlitz geformt ist. Die Befestigungsschlaufen können als Teil des Gurts oder als separates Element, das auf dem Gurt oder der Plane angebracht ist, ausgebildet sein.

Die Befestigungsschlaufen können mit Nieten, mit Schrauben, mit Nähten oder vergleichbaren Verbindungen an der Plane bzw. dem Planengurt befestigt sein. Die Befestigungsschlaufen können verschweißt oder verklebt sein oder durch andere bekannte form-, kraft- oder stoffschlüssig Verbindungen befestigt sein.

Bevorzugt ist die Schiebeplane derart angeordnet, dass sie sich seitlich des Laderaums von dem Vorderende zu dem Hinterende des Laderaums verschieben lässt. Beispielsweise umfasst eine Schiebeplane 20-30 Befestigungsschlaufen, welche sich in gleichen Abständen von dem Vorderende der Schiebeplane zu dem Hinterende der Schiebeplane erstrecken. Selbstverständlich kann die Schiebeplane aber z.B. auch hinten am Laderaum vorgesehen sein.

Gemäß einer beispielhaften Ausführungsform weist die Befestigungsschlaufe einen Schlaufeninnenumfang auf, der so mit dem Planenroller aufeinander abgestimmt ist, dass der Planenroller durch den Schlaufeninnenumfang hindurchführbar und der Auflagebereich in der Befestigungsschlaufe positionierbar ist. Der Schlaufeninnenumfang liegt vorzugsweise im Bereich des 2,5-fachen bis 4-fachen des Laufrollendurchmessers

Der hier verwendete Begriff des Schlaufeninnenumfangs bezieht sich auf die Öffnung in der Befestigungsschlaufe die tatsächlich für ein Durchstecken eines Planenrollers verwendet werden kann.

Durch die Kombination einer Plane mit erfindungsgemäßen Planenrollern und der Abstimmung des Schlaufenumfangs auf die verwendeten Plannenroller oder umgekehrte Abstimmung kann die Lebensdauer der Planen erhöht werden, da die Planen bei einem Wechsel eines defekten Planenrollers nicht beschädigt werden. Die Planenroller werden ausgetauscht ohne dabei die Befestigungsschlaufen öffnen zu müssen. Der Schlaufeninnenumfang wird so gewählt, dass eine einfache Handhabung bei dem Austausch eines defekten Rollenplaners ermöglicht wird. Dadurch reduziert sich der Wartungsaufwand sowie die diesbezüglichen Reparatur- bzw. Instandsetzungskosten. Es reduzieren sich die Ausfall- bzw. Stillstandszeiträume.

### Kurze Beschreibung der Zeichnungen

Im Folgenden sind beispielhafte Ausführungsformen der vorliegenden Erfindung unter Bezugnahme auf die beigefügten Zeichnungen näher beschrieben und erläutert. Es zeigen:
Fig. 1 eine Seitenansicht auf eine beispielhafte Ausführungsform eines erfindungsgemäßen Planenrollers.
Fig. 2 eine schräge Seitenansicht auf den in Fig. 1 gezeigten Planenroller.
Fig. 3 eine Hinteransicht auf den in Fig. 1 und Fig. 2 gezeigten Planenroller.
Fig. 4 eine Schnittansicht entlang des in Fig. 1 gezeigten Schnittes A-A.
Fig. 5 einen Ausschnitt einer beispielhaften ersten Ausführungsform einer erfindungsgemäßen Schiebeplane mit montiertem Planenroller.
Fig. 6 einen Ausschnitt einer beispielhaften zweiten Ausführungsform einer erfindungsgemäßen Schiebeplane in drei verschiedenen Zuständen.
Fig. 7 einen Ausschnitt einer erfindungsgemäßen Schiebeplane, die in einer Laufschiene eines Nutzfahrzeugs gelagert ist.
Fig. 8 zeigt eine Hinteransicht auf den in Fig. 7 gezeigten Ausschnitt mit Plane.
Fig. 9 verschiedene, beispielhafte Ausführungsformen von erfindungsgemäßen Planenrollern.

### Detaillierte Beschreibung

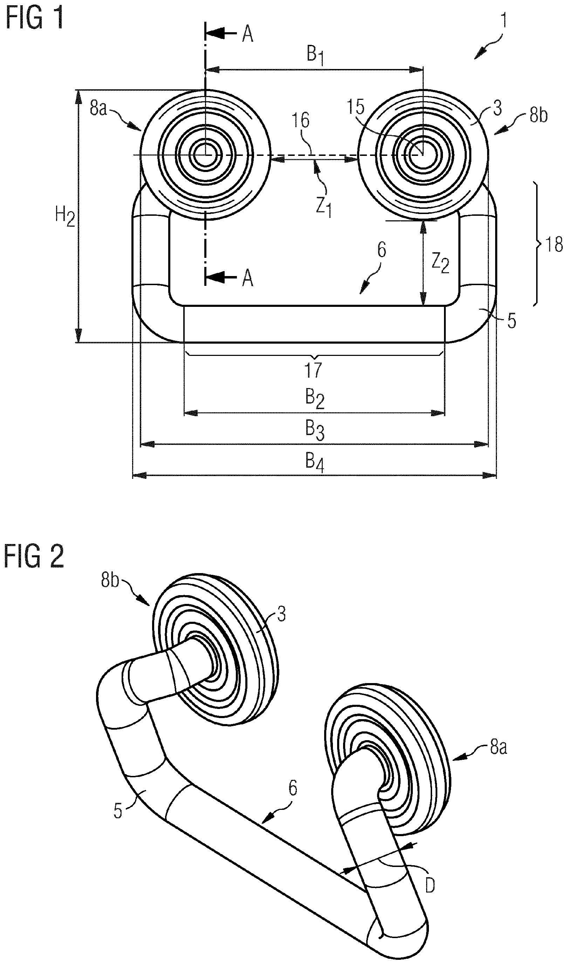

Fig. 1 zeigt eine Seitenansicht auf eine beispielhafte Ausführungsform eines erfindungsgemäßen Planenrollers 1. Zwei Laufrollen 3 sind über eine Laufrollenhalterung 5 miteinander verbunden. Die Laufrollenhalterung 5 ist ein durchgehender Körper, der keine Durchbrüche aufweist. Die Laufrollenhalterung 5 ist C- oder U-förmig. Die U- oder C-Form weist einen Mittelbereich 17 auf. Der Mittelbereich 17 geht rechts und links jeweils in einen Seitenabschnitt 18 über. Die Seitenabschnitte 18 stehen vertikal auf dem Mittelbereich 17. Die Laufrollen 3 sind an einem ersten Endbereich 8a und an einem zweiten Endbereich 8b der Laufrollenhalterung 5 angebracht. Auf dem Mittelbereich 17 befindet sich ein Auflagebereich 6, um den eine Befestigungsschlaufe einer Plane herumlegbar ist. Der Auflagebereich 6 ist von dem Zwischenraum zwischen den beiden Laufrollen 3 frei zugänglich. Der Zwischenraum hat eine minimale Weite Z₁. Der Mittelbereich 17 erstreckt sich parallel zu einer gedachten Verbindungslinie 16 zwischen den beiden Drehachsen 15 der beiden Laufrollen 3. Zwischen den Laufrollen 3 und dem Auflagebereich 6 befindet sich ein Zwischenraum mit dem minimalen Abstand Z₂.

Die Drehachsen 15 der Laufrollen 3 sind im Abstand B₁ voneinander beabstandet. Der Auflagebereich 6 hat eine Länge B₂. B₂ ist größer als B₁. Die maximale Breite von der einen zu der anderen Laufrolle (Laufrollenaußenseite) ist B₃. B₃ ist der Abstand zwischen dem Punkt, der sich in der Fig. 1 am äußersten linken Rand der linken Laufrolle 3 befindet, und dem Punkt, der sich in der Fig. 1 am äußersten rechten Rand der rechten Laufrolle 3 befindet. B₃ ist größer als B₂. Die maximale Breite der Laufrollenhalterung 5 ist B₄. B₄ ist der Abstand zwischen dem Punkt, der sich in der Fig. 1 am äußersten linken Rand des linken Seitenabschnitts 18 befindet, und dem Punkt, der sich in der Fig. 1 am äußersten rechten Rand des rechten Seitenabschnitts 18 befindet. Da B₄ größer ist als B₃, befinden sich die in horizontaler Richtung betrachteten äußersten Punkte des Planenrollers 1 auf dem linken und dem rechten Seitenabschnitt 18 und nicht auf den Laufrollen 3. Die maximale Höhe des Planenrollers 1 beträgt H₂.

Fig. 2 zeigt eine schräge Seitenansicht auf den in Fig. 1 gezeigten Planenroller 1, wobei die gegenüberliegende Seite im Vergleich zu der Fig. 1. gezeigt ist. Die Laufrollen 3 sind an dem ersten Endbereich 8a und dem zweiten Endbereich 8b der Laufrollenhalterung 5 angebracht. Der (C-förmige) U-förmige Körper, der die Laufrollenhalterung formt, hat einen zylindrischen Querschnitt mit dem Durchmesser D.

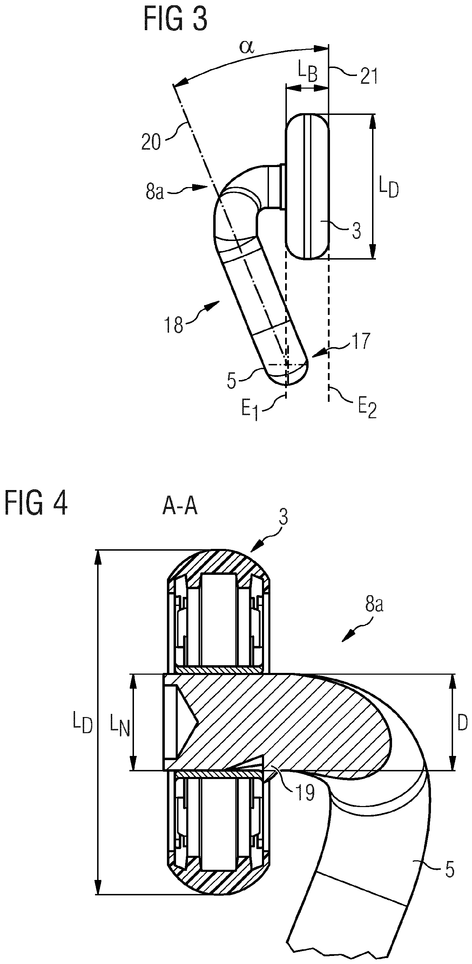

Fig. 3 zeigt eine Hinteransicht auf den in Fig. 1 und Fig. 2 gezeigten Planenroller 1. Die Laufrollen 3 mit dem Laufrollenaußendurchmesser L_{D} und der Laufrollenbreite L_{B} sind derart an der Laufrollenhalterung 5 angebracht, dass die Drehachse der Laufrolle 3 nicht rechtwinklig auf den Seitenabschnitten 18 der Laufrollen Halterung 5 steht. Die Laufrolle 3 ist stattdessen so angebracht, dass die vertikale Erstreckungsrichtung 20 des Seitenabschnitts 18 mit einem Neigungswinkel α bezogen auf eine Ebene 21, die senkrecht auf der Drehachse der Laufrolle 3 steht, verläuft.

Die Laufrolle 3 ist derart an der Laufrollenhalterung 5 im Endbereich 8a angebracht, dass der Mittelbereich 17, auf dem der Auflagebereich 6 angeordnet ist, zumindest teilweise innerhalb eines Bereiches, der sich zwischen zwei Ebenen E₁, E₂, die senkrecht zur Drehachse 15 der Laufrolle 3 verlaufen und die Laufrolle 3 an gegenüberliegenden Enden berührt, erstreckt.

Fig. 4 zeigt eine Schnittansicht entlang des in Fig. 1 gezeigten Schnittes A-A. Die Laufrolle 3 ist in dem ersten Endbereich 8a auf die Laufrollenhalterung 5 aufgeschoben. Auf der Laufrollenhalterung 5 ist ein Anschlag 19 in Form einer Nase vorgesehen, an den die Laufrolle 3 anstößt. Der Laufrollennabendurchmesser L_{N} entspricht dem Durchmesser D der Laufrollenhalterung 5 im Endbereich 8a. An der gezeigten Stirnfläche der Laufrollenhalterung 5 wird die Laufrollenhalterung 5 gestaucht, um die Laufrolle 3 auf der Laufrollenhalterung 5 zu fixieren (Stauchung in Fig. 4 nicht gezeigt).

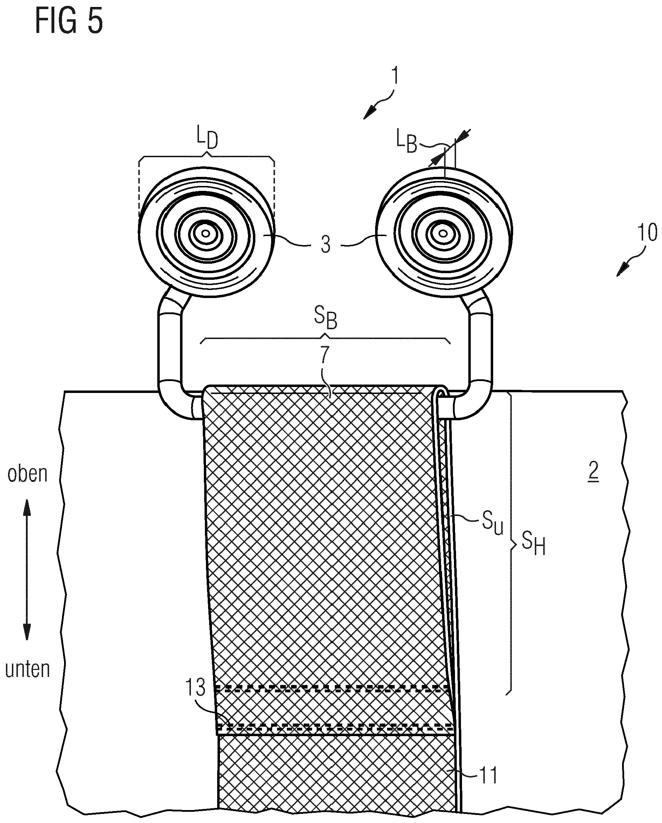

Fig. 5 zeigt einen Ausschnitt einer beispielhaften ersten Ausführungsform einer erfindungsgemäßen Schiebeplane 10. Auf der Innenseite einer Plane 2 ist ein Planengurt 11 aufgebracht. Am Ende des Planengurts 11 ist eine Befestigungsschlaufe 7 ausgebildet. Die Befestigungsschlaufe 7 wird durch ein umgeschlagenes Ende des Planengurts 11, das mit dem Planengurt 11 mit einer Naht 13 verbunden ist, gebildet. Die Befestigungsschlaufe 7 hat eine Schlaufenhöhe S_{H} und eine Schlaufenbreite S_{B}. Die Befestigungsschlaufe 7 hat den Schlaufeninnenumfang Su. Der Schlaufeninnenumfang Su begrenzt die Öffnung der Befestigungsschlaufe, durch die der Planenroller 1 hindurchgesteckt ist. Durch die Befestigungsschlaufe 7 verläuft ein erfindungsgemäßer Planenroller 1 derart, dass sich der Auflagebereich 6 (in der Fig. 5 durch die Befestigungsschlaufe 7 verdeckt) des Planenrollers 1 zumindest bereichsweise innerhalb der Befestigungsschlaufe 7 befindet. Die Laufrollen 3 stehen nach oben über die Plane 2 hervor. Die in Fig. 5 gezeigte oben-unten Richtung entspricht der Schwerkraftrichtung, wenn die Schiebeplane 10 in Verwendung ist, d.h. wenn die Laufrollen 3 auf einer am Nutzfahrzeug vorhandenen Laufschiene eingehängt sind.

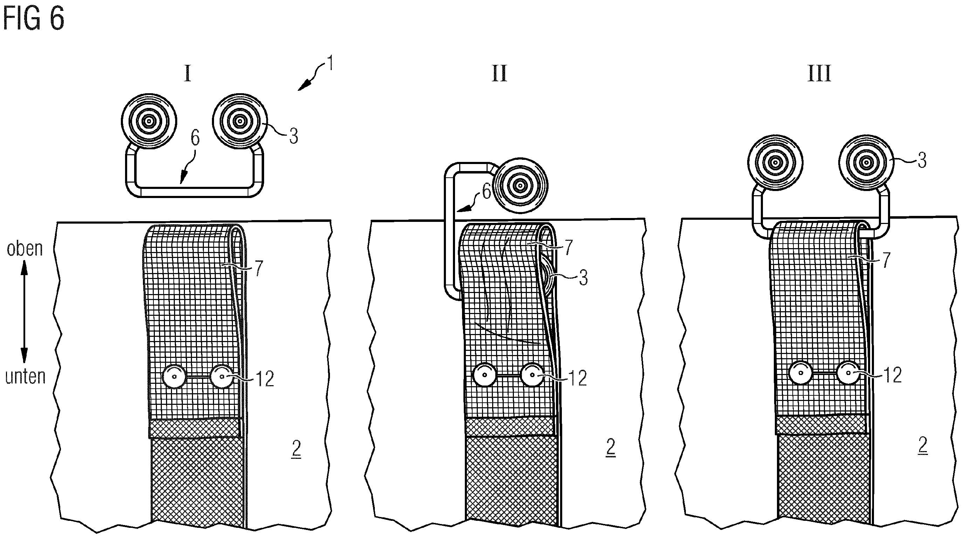

Fig. 6 zeigt eine beispielhafte zweite Ausführungsform einer erfindungsgemäßen Schiebeplane 10 in drei verschiedenen Zuständen. Bei dieser Ausführungsform ist die Befestigungsschlaufe 7 mit einer Niet- oder Schraubverbindung 12 an dem Planengurt befestigt. In dem links gezeigten Zustand I befindet sich der Planenroller 1 außerhalb der Befestigungsschlaufe 7. Im mittleren Zustand II befindet sich der Planenroller 1 teilweise in der Befestigungsschlaufe 7. Es befindet sich eine Laufrolle 3 des Planenrollers 3 in der Befestigungsschlaufe 7 und eine Laufrolle 3 des Planenrollers 3 außerhalb der Befestigungsschlaufe 7. Der Auflagebereich 6 des Planenrollers 3 befindet sich außerhalb der Befestigungsschlaufe 7. Im rechts gezeigten Zustand III befindet sich der Auflagebereich 6 des Planenrollers 1 innerhalb der Befestigungsschlaufe 7. Die beiden Laufrollen 3 stehen nach oben über die Befestigungsschlaufe 7 und die Plane 2 hervor. Die in Fig. 6 gezeigte oben-unten Richtung entspricht der Schwerkraftrichtung, wenn die Schiebeplane 10 in Verwendung ist, d.h. wenn die Laufrollen 3 auf einer am Nutzfahrzeug vorhandenen Laufschiene eingehängt sind.

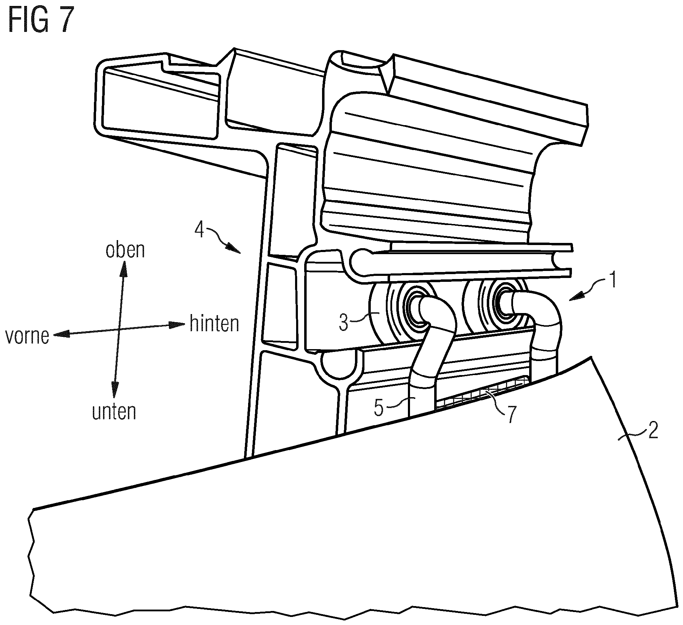

Fig. 7 zeigt eine erfindungsgemäße Schiebeplane 10, die in einer Laufschiene 4 eines Nutzfahrzeugs gelagert ist. Die Laufschiene 4 ist integral mit einem Längsträger des Nutzfahrzeugaufbaus ausgeführt. Die Laufrollen 3 sind derart in der Laufschiene 4 gelagert, dass sie sich durch ein Abrollen in der vorne-hinten Richtung bewegen können. An der Laufrollenhalterung 5 ist die Plane 2 über die Befestigungsschlaufe 7 befestigt. Die in Fig. 7 gezeigte oben-unten Richtung entspricht der Schwerkraftrichtung, wenn die Schiebeplane 10 in Verwendung ist, d.h. wenn die Laufrollen 3 auf einer am Nutzfahrzeug vorhandenen Laufschiene eingehängt sind.

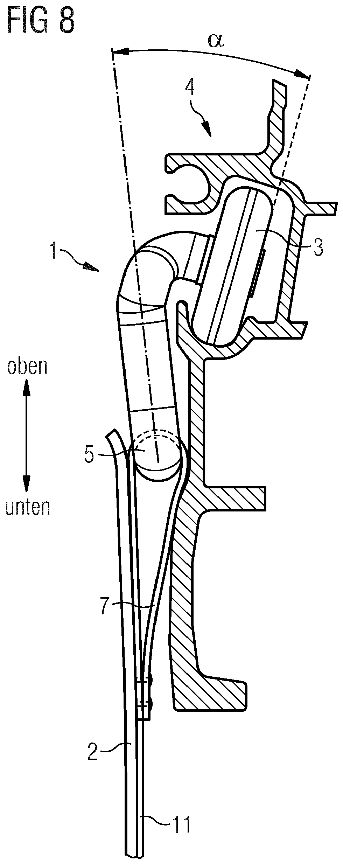

Fig. 8 zeigt eine Hinteransicht auf den in Fig. 7 gezeigten Ausschnitt. Die Laufrolle 3 stößt im oberen Bereich weder linksseitig noch rechtsseitig noch oben an den Dachholm an. Die Laufrolle ist somit in ihrem oberen Bereich berührungslos und von einem Luftspalt umgeben. Rechts der Laufrolle 3 ist ein Luftspalt zur Laufschienen-Innenseite bzw. Dachholm-Innenseite vorhanden, da die Plane u.a. beim Öffnen / Aufziehen durch den Bediener immer leicht vom Fahrzeug weggezogen wird und dadurch die Laufrolle oben nach rechts kippt. Die Plane hängt nicht mehr senkrecht nach unten. Im oberen Bereich der Laufrolle ist nach oben ebenfalls ein Luftspalt zwischen der Laufrolle 3 und der Laufschiene vorhanden, so dass die Laufrolle oben nicht an die Laufschiene anstößt.

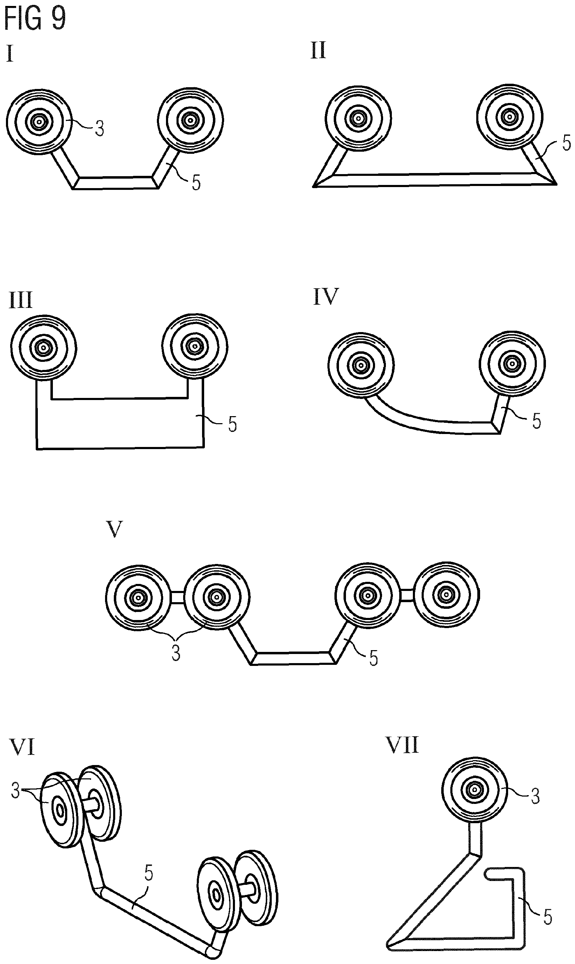

Fig. 9 zeigt verschiedene, beispielhafte Ausführungsformen von erfindungsgemäßen Planenrollern. I zeigt einen Planenroller 1 mit zwei Laufrollen 3 und einer dünnen, u-förmigen Laufrollenhalterung 5. Die vertikalen Seitenabschnitte der u-förmigen Laufrollenhalterung 5 stehen in einem Winkel größer 90° auf dem Mittelbereich der Laufrollenhalterung 5. II zeigt einen Planenroller 1 mit zwei Laufrollen 3 und einer dünnen, u-förmigen Laufrollenhalterung 5. Die vertikalen Seitenabschnitte der u-förmigen Laufrollenhalterung 5 stehen in einem Winkel kleiner 90° auf dem Mittelbereich der Laufrollenhalterung 5. III zeigt einen Planenroller 1 mit zwei Laufrollen 3 und einer u-förmigen Laufrollenhalterung 5, bei dem der Mittelbereich breiter als die vertikalen Seitenabschnitte ausgebildet sind. IV zeigt einen Planenroller 1 mit zwei Laufrollen 3 und einer Laufrollenhalterung 5, die nicht symmetrisch ist. V zeigt einen Planenroller 1 mit vier Laufrollen 3. Jeweils zwei Laufrollen 3 sind an dem ersten und dem zweiten Endbereich der Laufrollenhalterung 5 hintereinander angeordnet. VI zeigt einen Planenroller 1 mit vier Laufrollen 3. Jeweils zwei Laufrollen 3 sind an dem ersten und dem zweiten Endbereich der Laufrollenhalterung 5 einander gegenüberliegend angeordnet (Zwillingsbereifung). VII zeigt einen Planenroller 1 mit nur einer Laufrolle 3. Entsprechend ist an einem Endbereich der Laufrollenhalterung 5 keine Laufrolle 3 angebracht. Der Planenroller ist in ähnlicher Weise wie ein Kleiderbügel geformt. Anstelle eines Hakens des Kleiderbügels ist im oberen Bereich die Laufrolle angebracht. Diese liegt dem Auflagebereich für die Befestigungsschlaufe gegenüber.

### Gewerbliche Anwendbarkeit

Bei einer Vielzahl der heute auf dem Markt verfügbaren Systeme aus Laufschiene, Planenroller und Plane kann ohne Probleme der vorhandene Planenroller durch einen erfindungsgemäßen Planenroller ersetzt werden. Durch die Verwendung eines erfindungsgemäßen Planenrollers lassen sich Gewichtsersparnisse erreichen. Ferner werden Beschädigungen an der Plane durch den Austausch von defekten Planenroller vermieden, da keine Arbeit an der Plane als solche notwendig ist. Die erforderliche Zeit für einen Austausch eines erfindungsgemäßen Planenrollers ist zudem sehr viel kürzer als die Zeit, die für den Austausch eines herkömmlichen Planenrollers verbunden mit einem Auftrennen einer Befestigungsschlaufe notwendig ist. Durch die Verwendung eines erfindungsgemäßen Planenrollers lassen sich somit Kostenvorteile in Bezug auf das Gewicht, die erforderliche Zeit für einen Austausch und die potentielle Beschädigung der Plane erzielen. Ferner können die Herstellungskosten reduziert und ausufernde Stillstandszeiträume vermieden werden. Es ist kein "Flicken" der Seitenplane notwendig.

Mit Bezug auf die Fig. 6 bis Fig. 8 wird das Verfahren zum Verschieben einer Plane mit einem erfindungsgemäßen Planenroller bzw. einer erfindungsgemäßen Schiebeplane beschrieben.

Wie im Zustand I in der Fig. 6 dargestellt werden zunächst eine Plane 2 mit mehreren in Längsrichtung verteilten Befestigungsschlaufen 7 und mehrere Planenroller 3 bereitgestellt. Wie im Zustand II in der Fig. 6 dargestellt, wird der Planenroller 3 durch die Befestigungsschlaufen 7 hindurchgeführt. Dazu wird der Planenroller mit einer der Laufrollen 3 vorweg durch die Befestigungsschlaufe 7 eingesteckt. Wie im Zustand III der Fig. 6 dargestellt ist, wird der Planenroller 3 soweit in die Befestigungsschlaufe 7 eingesteckt, dass der Auflagebereich 6 des Planenrollers 3 innerhalb der Befestigungsschlaufe 7 positioniert ist. Für das Einführen des Planenrollers 3 in die Befestigungsschlaufe 7 gemäß der Zustände I bis III ist es nicht notwendig, die Befestigungsschlaufe 7 zu öffnen bzw. abzutrennen.

Wie in Fig. 7 dargestellt, kann die Plane 2, bei der die Planenroller 1 wie oben beschrieben in die Befestigungsschlaufen 7 eingeführt wurden, mithilfe der Laufrollen 3 der Planenroller 1 an der Laufschiene 4 angebracht werden. Durch die Planenroller 1 lässt sich die Plane in der Laufschiene 4 von vorne nach hinten oder von hinten nach vorne verschieben oder von heckseitig links nach heckseitig rechts oder von frontseitig rechts nach frontseitig links.

Wie in Fig. 8 dargestellt, stößt die Laufrolle 3 im oberen Bereich nicht an den Dachholm an. Wenn die Plane 2 verschoben wird, wird die Plane 2 zunächst unterseitig geöffnet und die Plane 2 dann durch "schrägen Zug" verschoben. Der Planenroller wird durch das seitliche, schräge "Wegziehen" der Plane 2 vom Fahrzeug im Dachholm, in dem die Laufschiene ausgebildet ist, geführt. Dadurch wird die Laufrollenhalterung 5 vom Dachholm im Bereich des Auflagebereichs nach links wegbewegt und die Laufrolle 3 bewegt sich im oberen Bereich nach rechts in Richtung Laufschienen-Innenseite. Sowie die Plane 2 geschlossen und im unteren Fahrzeugbereich fixiert ist, wirkt keine schräge Zugkraft mehr auf die Plane 2 bzw. die Planenroller 1. Daher bewegt sich die Laufrollenhalterung 5 innerhalb der Laufschiene wieder nach links in Richtung Laufschienen-Außenseite. Infolge des Kontaktes der Befestigungsschlaufe 7, die den Auflagebereich der Laufrollenhalterung umschlingt, und des Dachholms, kommt es aber nicht zu einer Berührung der Laufrolle mit der Laufschienen-Innenseite. Die Laufrolle ist aus diesem Grund im oberen Bereich stets ohne Berührung mit dem Dachholm. Dadurch kann eine Beschädigung bzw. ein übermäßiger Verschleiß vermieden werden.

Es wird explizit erklärt, dass alle Merkmale, die in der Beschreibung und/oder den Ansprüchen offenbart sind, dazu bestimmt sind, separat und unabhängig voneinander sowohl für den Zweck der ursprünglichen Offenbarung als auch für den Zweck der Beschränkung der beanspruchten Erfindung unabhängig von der Zusammenstellung der Merkmale in den Ausführungsformen und/oder den Ansprüchen offenbart zu werden. Es wird explizit erklärt, dass alle Wertebereiche oder Angaben von Gruppen von Objekten jeden möglichen Zwischenwert oder jedes mögliche dazwischen liegende Objekt sowohl für den Zweck der ursprünglichen Offenbarung als auch für den Zweck der Beschränkung der beanspruchten Erfindung, insbesondere zur Bestimmung der Grenzen von Wertebereichen offenbaren.

### Bezugszeichenliste

- 1: Planenroller
- 2: Plane
- 3: Laufrolle
- 4: Laufschiene
- 5: Laufrollenhalterung
- 6: Auflagebereich
- 7: Befestigungsschlaufe
- 8a: Erster Endbereich
- 8b: Zweiter Endbereich
- 10: Schiebeplane
- 11: Planengurt
- 12: Niete/Schraube
- 13: Naht
- 15: Laufrollendrehachse
- 16: Verbindungslinie zwischen den Laufrollendrehachsen
- 17: Mittelbereich
- 18: Seitenabschnitt
- 19: Anschlag
- 20: vertikale Erstreckungsrichtung
- 21: Ebene, die senkrecht zur Drehachse der Laufrolle verläuft
- D: Durchmesser der Laufrollenhalterung
- L_{D}: Laufrollenaußendurchmesser
- L_{N}: Laufrollennabendurchmesser
- L_{B}: Laufrollenbreite
- Z₁: Minimale Weite des Zwischenraums zwischen den Laufrollen
- Z₂: Minimaler Abstand zwischen Laufrolle und Auflagebereich
- B₁: Abstand zwischen Drehachsen
- B₂: Länge des Auflagebereichs
- B₃: Maximale Breite von der einen zu der anderen Laufrolle
- B₄: Maximale Breite der Laufrollenhalterung
- H₂: Maximale Höhe des Planenrollers
- α: Neigungswinkel
- S_{B}: Befestigungsschlaufenbreite
- S_{H}: Befestigungsschlaufenhöhe
- S_{U}: Befestigungsschlaufeninnenumfang

## Patentansprüche

1. Planenroller (1) zur verschiebbaren Lagerung einer Plane (2) eines Nutzfahrzeugs wie zum Beispiel eines Lastkraftwagenanhängers, mit:
- einer Laufrollenhalterung (5), die einen ersten Endbereich (8a) und einen zweiten Endbereich (8b) und einen hierzwischen befindlichen Auflagebereich (6) umfasst, der von den beiden Endbereichen (8a, 8b) abgesetzt und als Anlage für eine Befestigungsschlaufe (7) der Plane (2) ausgebildet ist, und
- mindestens einer in einer am Nutzfahrzeug vorhandenen Laufschiene (4) führbaren Laufrolle (3), die an dem ersten Endbereich (8a) gelagert ist,
wobei ein frei zugänglicher Zwischenraum zwischen der Laufrolle (3) an dem ersten Endbereich (8a) und dem zweiten Endbereich (8b) ausgebildet ist und der zwischen den beiden Endbereichen (8a, 8b) vorhandene Auflagebereich (6) von dem Zwischenraum zum Einbringen der Befestigungsschlaufe (7) her frei zugänglich ist.

2. Planenroller (1) nach Anspruch 1, bei dem in einer Seitenansicht die mindestens eine Laufrolle (3) an dem ersten Endbereich (8a) oberhalb des Auflagebereichs (6) und diesem gegenüberliegend angeordnet ist.

3. Planenroller (1) nach Anspruch 1 oder 2, bei dem mindestens eine Laufrolle (3) an dem zweiten Endbereich (8a, 8b) angebracht ist und der Zwischenraum in einer Seitenansicht zwischen den beiden einander gegenüberliegenden Laufrollen (3) ausgebildet ist.

4. Planenroller (1) nach einem der voranstehenden Ansprüche, bei dem ein durchgängig freier Raum zwischen dem Auflagebereich (6) für die Befestigungsschlaufe (7) und dem Zwischenraum vorhanden ist, so dass der Planenroller (1) als Ganzes in die geschlossene Befestigungsschlaufe (7) einfädelbar ist.

5. Planenroller (1) nach einem der voranstehenden Ansprüche, bei dem die Laufrollenhalterung (5) in einer Seitenansicht eine im Wesentlichen C- oder U- oder V-Form hat und die zwei Endbereiche (8a, 8b) sich an zwei vertikalen Seitenabschnitten (18) dieser C- oder U- oder V-Form befinden und der Auflagebereich (6) an der den Endbereichen (8a, 8b) zugewandten Seite eines Mittelbereichs (17) dieser C- oder U- oder V-Form ausgebildet ist.

6. Planenroller (1) nach einem der voranstehenden Ansprüche, bei dem die maximale Breite der Laufrollenhalterung (B₄) größer ist als die maximale Breite (B₃) von der einen zu der anderen, in Seitenansicht gegenüberliegenden Laufrolle (3), wobei die maximalen Breiten (B₃, B₄) jeweils in Richtung einer gedachten Verbindungslinie (16) zwischen den Drehachsen (15) der beiden Laufrollen (3) gemessen werden.

7. Planenroller (1) nach einem der voranstehenden Ansprüche, bei dem die Laufrollenhalterung (5) ein Bauteil mit einem kreisförmigem Querschnitt (D), der kleiner dem 0,5-fachen des Laufrollenaußendurchmessers (L_{D}) ist, vorzugsweise kleiner 30 mm ist, weiter vorzugsweise kleiner 15 mm ist.

8. Planenroller (1) nach einem der voranstehenden Ansprüche, bei dem der Zwischenraum eine minimale Weite (Z₁), die im Bereich des 0,5-fachen bis 1-fachen des Laufrollenaußendurchmessers (L_{D}), vorzugsweise im Bereich von 1 mm bis 100 mm liegt, weiter vorzugsweise im Bereich von 5 mm bis 30 mm, weiter vorzugsweise im Bereich von 10 mm bis 20 mm liegt, aufweist.

9. Planenroller (1) nach einem der voranstehenden Ansprüche, bei dem ein minimaler Abstand (Z₂) zwischen der Laufrolle (3) und dem Auflagebereich (6) im Bereich des 0,5-fachen bis 1-fachen des Laufrollenaußendurchmessers (L_{D}), vorzugsweise im Bereich von 1 mm bis 100 mm, weiter vorzugsweise im Bereich von 5 mm bis 30 mm, weiter vorzugsweise im Bereich von 10 mm bis 20 mm liegt.

10. Planenroller (1) nach einem der voranstehenden Ansprüche, bei dem die Länge (B₂) des Auflagebereichs (6), die in Richtung der gedachten Verbindungslinie (16) gemessen wird, im Bereich des 1,5-fachen bis 2,5-fachen des Laufrollendurchmessers (L_{D}), insbesondere im Bereich von 1 mm bis 100 mm liegt.

11. Planenroller (1) nach einem der voranstehenden Ansprüche, bei dem die maximale Breite (B₄) des Planenrollers (1) kleiner dem 3-fachen des Laufrollenaußendurchmessers (L_{D}), insbesondere kleiner 120 mm ist, und/oder
eine maximale Höhe (H₂) des Planenrollers (1), gemessen senkrecht zu der Richtung der gedachten Verbindungslinie (16), kleiner dem 2-fachen des Laufrollenaußendurchmessers (L_{D}), insbesondere kleiner 100 mm ist.

12. Planenroller (1) nach einem der voranstehenden Ansprüche, bei dem die Laufrollen (3) derart an der Laufrollenhalterung (5) angebracht sind, dass der Auflagebereich (6) zumindest teilweise innerhalb eines Bereiches, der sich zwischen zwei Ebenen (E₁, E₂), die senkrecht zur Drehachse (15) der Laufrolle (3) verlaufen und die Laufrolle (3) an gegenüberliegenden Enden der Laufrolle (3) berührt, erstreckt, liegt.

13. Planenroller (1) nach einem der voranstehenden Ansprüche, bei dem die Laufrollen (3) derart an der Laufrollenhalterung (5) angebracht sind, dass zwischen einer Ebene (21), die senkrecht zur Drehachse (15) der Laufrolle (3) verläuft, und einer vertikalen Erstreckungsrichtung (20) der zwei vertikalen Seitenabschnitte (18) ein Neigungswinkel im Bereich 1° bis 40°, vorzugsweise im Bereich 10° bis 30°liegt.

14. Schiebeplane (10) zum Abdecken eines Laderaums eines Nutzfahrzeugs, wie beispielsweise eines Lastkraftwagenanhängers, mit:
- einer Plane (2), an der mehrere Befestigungsschlaufen (7) angebracht sind, und
- mehreren Planenrollern (1) nach einem der voranstehenden Ansprüche, wobei jeweils ein Planenroller (1) in eine Befestigungsschlaufe (7) der Plane (2) derart eingeschlauft ist, dass die Befestigungsschlaufe (7) an dem Auflagebereich (6) des Planenrollers (1) anliegt, und die Plane (2) mithilfe der über die Befestigungsschlaufe (7) befestigten Planenroller (1) auf der mit dem Nutzfahrzeug verbundenen Laufschiene (4) hin- und herverschiebbar ist.

15. Schiebeplane (10) nach Anspruch 14, bei dem ein Schlaufeninnenumfang (Su) der mehreren Befestigungsschlaufen (7) und der Planenroller (1) so aufeinander abgestimmt sind, dass der Planenroller (1) durch den Schlaufeninnenumfang (Su) hindurchführbar und der Auflagebereich (6) in der Befestigungsschlaufe (7) positionierbar ist, wobei der Schlaufeninnenumfang (Su) vorzugsweise im Bereich des 2,5-fachen bis 4-fachen des Laufrollendurchmessers (L_{D}) liegt.
